# EUROPÄISCHE PATENTANMELDUNG

(11) **EP 1 389 854 A1**
(43) Veröffentlichungstag der Anmeldung: **18.02.2004**
(21) Anmeldenummer: 03011583.6
(22) Anmeldetag: 22.05.2003
(51) Int. Cl.: H04L 12/28

(54) **Fernbedienung für ein Installationsgebäudesystem**

(30) Priorität: 14.08.2002 DE 10237944
(71) Anmelder: PAUL HOCHKÖPPER GmbH & Co. KG, D-58511 Lüdenscheid (DE)
(72) Erfinder: Haugk, Andreas, 58579 Schalksmühle (DE); Ballach, Hans-Ulrich, 58507 Lüdenscheid (DE); Schillo, Heiko, 58762 Altena (DE)
(74) Vertreter: Hassler, Werner, Dr.

(57) **Zusammenfassung**

Eine Fernbedienung für ein Installations-Gebäudesystem mit einem Prozessor in einer Hauptstation und mit steuerbaren und regelbaren Funktionssystemen wie Lichtanlagen, Sonnenschutzanlagen, Türanlagen, Heizungsanlagen und dergleichen. Das technische Problem ist ein willkürlicher Eingriff in das Installations-Gebäudesystem. Zwischen der Fernbedienung (3) und der Haupstation (1) ist ein Funkkanal eingerichtet, und weitere Funkkanäle verbinden die Fernbedienung /3) direkt mit Funktionssystemen.

## Beschreibung

Die Erfindung betrifft eine Fernbedienung für ein Installations-Gebäudesystem mit einem Prozessor in einer Hauptstation und mit steuerbaren und regelbaren Funktionssystemen wie Lichtanlagen, Sonnenschutzanlagen, Türanlagen, Heizungsanlagen und dergleichen.

Installations-Gebäudesysteme werden über Steuerprogramme weitgehend automatisch gesteuert. Die EP 0 900 417 B 1 beschreibt ein Gebäudesystem mit Bewegungsmeldern, die auf die Anwesenheit von Personen ansprechen und entsprechende Schaltungen bewirken.

Aufgabe der Erfindung ist ein willkürlicher Eingriff in das Installations-Gebäudesystem.

Diese Aufgabe wird nach der Erfindung dadurch gelöst, daß zwischen der Fernbedienung und der Haupstation ein Funkkanal eingerichtet ist und daß weitere Funkkanäle die Fernbedienung direkt mit Funktionssystemen verbinden.

Die Erfindung unterscheidet sich insofern vom Stand der Technik, als die Fernbedienung einen aktiven Eingriff in das Gebäudesystem ermöglicht. Es lassen sich so gewünschte Schaltvorgänge willkürlich auslösen. Die Fernbedienung ermöglicht einen direkten Eingriff in Funktionssysteme unter Umgehung des Gebäudesystems.

Die Benutzung der Fernbedienung wird dadurch erleichtert, daß die Fernbedienung mit einem aufladbaren Akkumulator ausgestattet ist.

Eine Anpassung der Fernbedienung an das Gebäudesystem wird dadurch möglich, daß eine Schale der Hauptstation zur Aufnahme der Fernbedienung ausgebildet ist und Kontakte zum Anschluß der Fernbedienung aufweist. Über diese Kontakte können von dem Gebäudesystem direkt Anpassungen der Einstellungen der Fernbedienung vorgenommen werden.

Zum Anschluß an einen PC ist eine USB-Schnittstelle in der Hauptstation und/oder der Fernbedienung vorgesehen.

Zur direkten Beeinflussung des Gebäudesystems ist eine Bus-Schnittstelle in der Hauptstation vorgesehen.

Zum weiteren Austausch von Informationen ist eine ISDN-Schnittstelle in der Hauptstation vorgesehen.

Alarmmeldungen können dadurch schneller und sicherer übertragen werden, daß die Hauptstation eine GSM-Modemkarte zum Zugang in das Mobilnetz aufweist.

Eine Erweiterung der Nutzungsmöglichkeiten der Fernbedienung wird dadurch erreicht, daß die Fernbedienung als schnurloses Telefon nach DECT-Standard aufgebaut ist und Mikrofon und Lautsprecher enthält.

Das Anwendungsgebiet der Fernbedienung wird dadurch erweitert, daß die Fernbedienung mit einem Infrarotsender ausgestattet ist. Die Fernbedienung kann dann zur Steuerung der üblichen elektrischen und elektronischen Geräte dienen.

Ein Ausführungsbeispiel der Erfindung wird anhand einer schematischen Zeichnung erläutert.

Eine Hauptstation 1 nimmt in einer Schale 2 eine herausnehmbare Fernbedienung 3 auf. Sowohl die Hauptstation 1 als auch die Fernbedienung 3 haben Antennen 4, 5 für Funksignale der Frequenz 868,3 MHz. Die Hauptstation 1 weist ein Tastenfeld und/oder ein Anzeigefeld 6, Anschlüsse bzw. Schnittstellen 7, 8, 9, 10, 11, 12 für ein Bussystem, eine GSM-Modemkarte, ein ISDN-Schnittstelle, eine Türsprechanlage, eine USB-Schnittstelle, eine LAN-Schnittstelle sowie einen Anschluß 13 für die Versorgungsspannung von 230 V∼ auf.

Die Schale 2 die Fernbedienung 3 weist eine Kontaktanordnung 14 auf und ist somit mit der Fernbedienung 3 galvanisch verbunden, solange diese in der Schale 2 liegt.. Die Kontaktanordnung 14 überträgt einerseits den Ladestrom für einen nicht dargestellten Akkumulator der Fernbedienung 3. Andererseits werden Signale eines Mikroprozessors der Hauptstation 1 sowie von Anschlußgeräten übertragen. Die Fernbedienung 3 hat ein Eingabefeld 15 und ein Display 16 sowie eine USB-Schnittstelle 17 für den direkten Anschluß eines PC.

Nach Wunsch ist die Fernbedienung mit einem DECT-Modul und mit Mikrofon und Lautsprecher ausgestattet, so daß die Fernbedienung als schnurloses Telefon verwendbar ist.

Die Fernbedienung 3 ermöglicht den direkten Eingriff in ein Gebäudesystem. Es können willkürlich Funktionen unabhängig von der Programmierung des Gebäudesystems angesteuert werden. Das Display 16 der Fernbedienung hat Touchscreen-Funktionen, die sich programmieren lassen. Die Fernbedienung 3 nimmt integrierte Zeitsteuerungen wie z.B. Wochenuhren auf. Die Fernbedienung 3 kann alle Schaltfunktionen und Dimmfunktionen ausführen.

Signale des Haussystems lassen sich in die Fernbedienung übertragen und können insbesondere Alarmsignale auslösen. Diese Alarmmeldungen können von der Fernbedinenung weitergeleitet werden, z.B. in ein Mobilnetz, in das Internet oder auf eine E-Mail-Adresse. Auch funkgesteuerte Schaltmodule lassen sich direkt ansteuern. Der ISDN-Anschluß ermöglicht einen Ferneingriff und eine Auslösung von Schaltvorgängen als Antwort auf eine Alarmmeldung oder Programmänderungen.

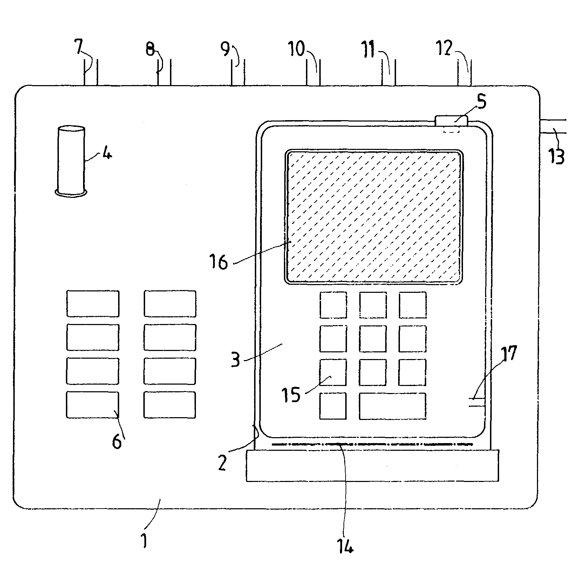

## Patentansprüche

1. Fernbedienung für ein Installations-Gebäudesystem mit einem Prozessor in einer Hauptstation und mit steuerbaren und regelbaren Funktionssystemen wie Lichtanlagen, Sonnenschutzanlagen, Türanlagen, Heizungsanlagen und dergleichen, **dadurch gekennzeichnet, daß** zwischen der Fernbedienung (3) und der Haupstation (1) ein Funkkanal eingerichtet ist und daß weitere Funkkanäle die Fernbedienung /3) direkt mit Funktionssystemen verbinden.

2. Fernbedienung nach Anspruch 1, **dadurch gekennzeichnet, daß** die Fernbedienung (3) mit einem aufladbaren Akkumulator ausgestattet ist.

3. Fernbedienung nach Anspruch 2, **dadurch gekennzeichnet, daß** eine Schale (2) der Hauptstation (1) zur Aufnahme der Fernbedienung (3) ausgebildet ist und Kontakte (13, 14) zum Anschluß der Fernbedienung aufweist.

4. Fernbedienung nach einem der Ansprüche 1 bis 3, **gekennzeichnet durch** eine USB-Schnittstelle (11, 17) in der Hauptstation und/oder der Fernbedienung.

5. Fernbedienung nach einem der Ansprüche 1 bis 4, **gekennzeichnet durch** eine Bus-Schnittstelle (8) in der Hauptstation.

6. Fernbedienung nach einem der Ansprüche 1 bis 5, **gekennzeichnet durch** eine ISDN-Schnittstelle (9) in der Hauptstation.

7. Fernbedienung nach einem der Ansprüche 1 bis 6, **gekennzeichnet durch** eine GSM-Modemkarte in der Hauptstation zum Zugang in das Mobilnetz.

8. Fernbedienung nach einem der Ansprüche 1 bis 7, **dadurch gekennzeichnet, daß** die Fernbedienung als schnurloses Telefon nach DECT-Standard aufgebaut ist und Mikrofon und Lautsprecher enthält.

9. Fernbedienung nach einem der Ansprüche 1 bis 8, **dadurch gekennzeichnet, daß** die Fernbedienung zusätzlich mit einem Infrarotsender ausgestattet ist.
